# EUROPEAN PATENT SPECIFICATION

(11) **EP 4 561 947 B1**
(45) Date of publication and mention of the grant of the patent: **01.10.2025**
(21) Application number: 23755481.1
(22) Date of filing: 21.07.2023
(51) Int. Cl.: C02F 9/00, B01D 53/047, B01D 53/14, B01D 53/22, B01D 53/52, B01D 53/58, B01D 53/62, C02F 1/20, C02F 1/56, C02F 1/66, C02F 11/04, C02F 101/16, C02F 103/24, C02F 103/28

(54) **METHOD AND PLANT FOR TREATING WASTE WATERS**
VERFAHREN UND ANLAGE ZUR BEHANDLUNG VON ABWÄSSERN
PROCÉDÉ ET INSTALLATION DE TRAITEMENT DES EAUX USÉES

(30) Priority: 25.07.2022 IT 202200015627
(43) Date of publication of application: 04.06.2025
(73) Proprietor: SDG S.r.l., 36015 Schio (VI) (IT)
(72) Inventor: MARTINI, Giambattista, 36015 Schio (VI) (IT)
(74) Representative: Gallo, Luca
(86) International application number: PCT/IB2023/057442
(87) International publication number: WO 2024/023670

(56) References cited:
- US-A1- 2017 190 600
- US-A1- 2021 253 456
- US-A1- 2022 127 176

## Description

### Field of application

The present invention relates to a method and a plant for treating waste waters according to the respective independent claims no. 1 and 8.

The method and plant for treating waste waters in question are advantageously intended to be used in the water treatment and purification sector, or in sectors where a treatment of waste waters is necessary, for example in the food industry, in the leather tanning industry, in the paper industry, in order to eliminate pollutants from the aforesaid water deriving from urban discharges or from processes which use large quantities of waters to be purified.

### State of the art

In the waste water treatment and purification sector, in particular waste waters containing at least one organic pollutant compound (in the jargon also referred to as "organic load"), treatment plants are known which are mainly divided into two categories: aerobic and anaerobic. In both cases, the plant is designed to degrade the aforesaid organic pollutant compound contained in the waste waters, or to transform the chemical structure thereof into a less complex one by means of oxidation to make it less harmful and/or easier to separate. Thereby, such plants are aimed at reducing the quantity of the organic pollutant compound in the waste waters in order to make the latter suitable for being used again for various purposes, for example in agriculture, or for being released into the environment, for example in waterways or at sea, without contamination.

Generally, aerobic plants are aimed at treating waste waters containing a low concentration of organic pollutant compounds, which is expressed in terms of COD (Chemical Oxygen Demand), or as the quantity of oxygen necessary for the complete chemical oxidation of the organic and inorganic compounds present in a water sample. For example, aerobic plants are aimed at treating waste waters in which the pollutant compounds have a COD concentration generally less than 10,000 ppm.

Conversely, anaerobic plants are particularly adapted to treat waste waters with a high COD load, for example greater than 10,000 ppm.

Both types of plants employ conventional treatment methods, of a chemical-physical and/or biological type.

In particular, the aerobic plants are typically divided into three sections, of which a first section, comprising mechanical filters (e.g., membranes and/or cross-flow filters) and sedimentation tanks, in particular primary sedimentation tanks, for physically treating the waste water, in order to remove most of the suspended solids in the water. A subsequent second section comprises one or more tanks, in which the waste water is chemically treated, for example by adding one or more reagents to precipitate the salts contained in the water, and a sedimentation tank, in which the sedimentation of solids occurs (precipitated salts and other suspended solids), separated by gravity (or by filtration) from the rest of the water. Lastly, in a third section a biological treatment is carried out in an aerobic rector, in which aerobic bacteria break down the organic load contained in the water, metabolizing the carbon contained in the organic pollutant compounds dissolved and/or suspended in the waste waters, and producing carbon dioxide, water and biomass.

In particular, compressed air is also insufflated in the aerobic reactor in order to increase the quantity of oxygen dissolved in the water, necessary for the metabolism of the aforesaid bacteria. The biomass produced by the bacteria is then sedimented and separated from the rest of the purified waste waters.

Furthermore, some aerobic plants comprise an additional section, downstream of the third section, in which a further chemical treatment of the purified waste waters is provided, for example with disinfectant agents.

Conversely, anaerobic plants generally have a stirring section, which comprises a tank in which a volume of waste waters to be treated, to which a flocculating agent is added, is stirred and the organic pollutant compounds to be removed aggregate together to form a flocculation with an average density greater than that of the waste water. Furthermore, the anaerobic plants comprise a sedimentation section in which the volume of waste waters is subdivided by gravity into a volume of clarified waste waters, and a volume of sludge comprising mostly flocculation, which having a higher density than the volume of clarified waste waters, deposits at the bottom of the sedimentation section.

Furthermore, the anaerobic plants comprise at least one anaerobic digestion section. More specifically, anaerobic digestion is intended as a degradation process of at least one organic compound by microorganisms in anaerobic conditions. Such an anaerobic digestion section comprises an anaerobic digester, which contains anaerobic bacteria, acting on the flocculation contained in the sludge in order to transform the latter into biogas, comprising at least carbon dioxide and methane, and a substantially liquid digestate.

The most common anaerobic digesters operate continuously and are provided with stirring means (hydraulic and/or mechanical) adapted to mix a mass to be treated (generally the sludge containing the flocculation), the quantity of which is kept almost constant. In other words, the mass flow rate of sludge in input is equal to the mass flow rate of the products in output, i.e., biogas and digestate.

Lastly, the anaerobic plants comprise an electrical energy generator, which produces electrical energy by means of the combustion of the methane contained in the biogas.

The Patent Application Publications US 2017/190600 A1 and US 2022/127176 A1 disclose known methods and plants for the treatment of waste water. The plants for treating waste waters of known type described up to now have proved to be not free from drawbacks in practice.

A first drawback is given by the fact that the plants for treating waste waters contribute to environmental pollution since they envisage the emission of greenhouse gases, in particular carbon dioxide, into the atmosphere.

In fact, the carbon dioxide produced by the aerobic bacteria and following the generation of biogas and the combustion of the methane contained in the biogas is released unchecked into the atmosphere without the possibility of being recovered.

A further drawback is given by the fact that plants for treating waste waters of known type envisage high retention times of the waste waters to be treated, in particular in the biological treatment section of the waste waters, both in the case of anaerobic digestion of the flocculation and in the case of treatment with aerobic bacteria.

A further drawback is given by the fact that the plants for treating waste waters are expensive from an energy point of view. In fact, the aforesaid plants generally operate with high compressed air flow rates in order to mix the waste waters in the stirring section (for the anaerobic plants) or in the third section (for the aerobic plants), for example, requiring a large amount of electrical energy to power the compressors.

A further drawback is given by the fact that the plants and methods for treating waste waters are adapted to treat only one type of waste waters, in particular based on the organic load contained in the waste waters themselves.

### Presentation of the invention

In this situation, the problem underlying the present invention is therefore that of obviating the drawbacks manifested by the solutions of the known type discussed above, providing a method and a plant for purifying waste waters capable of minimizing the emissions of carbon dioxide, nitrogen compounds and phosphorus with respect to the methods and plants of known type.

Another object of the present invention is to provide a method and a plant for treating waste waters which allow reducing the treatment times necessary to eliminate at least one organic pollutant compound from the aforesaid waste waters.

Another object of the present invention is to provide a plant for treating waste waters capable of being self-sufficient from an energy point of view.

Another object of the present invention is to provide a versatile plant for treating waste waters, capable of treating waste waters regardless of the concentration of organic pollutant compounds contained therein.

Another object of the present invention is to provide a plant for treating waste waters capable of breaking down the pollutants present in the waters to be treated so as not to require further treatments downstream of the plant itself.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:

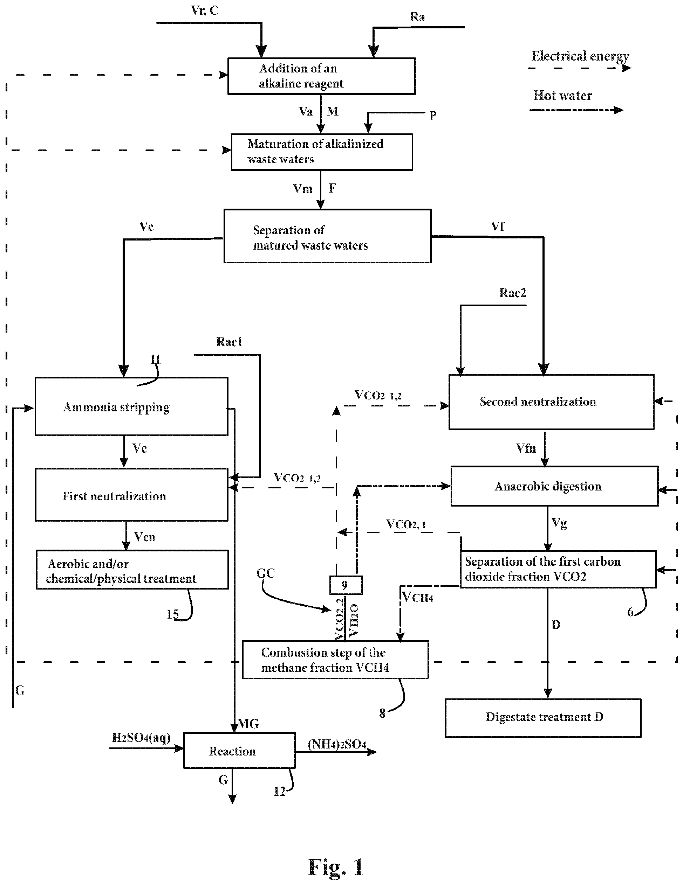

- Figure 1 shows a schematic representation of the method for purifying waste waters according to a preferred embodiment of the present invention;
- Figure 2 shows a schematic representation of a portion of the plant for purifying waste waters object of the present invention.

### Detailed description of a preferred embodiment

With reference to the attached drawings, the reference numeral 1 indicates the plant for treating waste waters object of the present invention.

The plant 1 according to the present invention is intended to be used in sites for treating and purifying various types of waste waters, for example waste waters deriving from the processing of animal hides, foodstuffs or urban waters.

The plant 1 can advantageously operate according to an intermittent process (i.e., a batch-type process, with predetermined volumes of waste waters, treated discontinuously) and/or according to a continuous process (i.e., with a continuous current of waste waters in input), preferably according to a continuous process.

According to the idea underlying the present invention, the plant 1 comprises a first tank 10 arranged for containing waste waters Vr to be treated, which waste waters Vr comprise at least one organic pollutant compound C. Furthermore, the plant 1 comprises metering means for metering an alkaline reagent Ra in the first tank 10 and for obtaining alkalinized waste waters Va.

Such a first tank 10 is advantageously employed as an accumulation buffer when the plant 1 envisages treating the waste waters Vr continuously, allowing to make up for any interruptions in the current of waste waters Vr toward the first tank 10 for a time equal to the ratio between the volume of the first tank 10 and the flow rate of waste waters Vr in output therefrom.

Obviously, if the plant 1 envisages treating the waste waters Vr according to a discontinuous process organized for example according to fixed treatment volumes, the volume of waste waters Vr in the first tank 10 is substantially equal to the total volume treated in the entire process.

As described in more detail below, the alkaline reagent Ra is intended to react with the organic pollutant compound C to hydrolyze the molecules of the latter, and transform it into modified molecules M, in particular hydrolyzed or denatured ones.

Furthermore, the plant 1 is provided with a maturation unit 2, comprising at least one second tank 20 in fluid communication with the first tank 10, and in which alkalinized waste waters Va are susceptible of being introduced which are coming from the first tank 10.

Advantageously, the plant 1 comprises means for transferring the alkalinized waters Va from the first tank 10 to the second tank 20, such as for example one or more centrifugal pumps.

Operatively, the alkalinized waste waters Va are preferably retained in the second tank 20 for a maturation time tm, during which the hydrolyzed molecules M are intended to coagulate in order to form a flocculation F and in order to obtain matured waste waters Vm.

Advantageously, the plant 1 comprises further metering means for metering a polyelectrolyte P in the second tank 20 in order to accelerate the formation of the flocculation F.

Advantageously, the maturation unit 2 comprises stirring means 21, for example a mechanical stirrer arranged inside the second tank 20 and provided with an impeller, so as to facilitate the contact between the modified molecules M (and possibly between the modified molecules M and a polyelectrolyte P) and to form the flocculation F.

Furthermore, the plant 1 comprises a separation unit 3 in fluid communication with the maturation unit 2. In particular, the separation unit 3 is arranged for separating matured waste waters Vm coming from the maturation unit 2 into at least clarified waters Vc and sludge Vf.

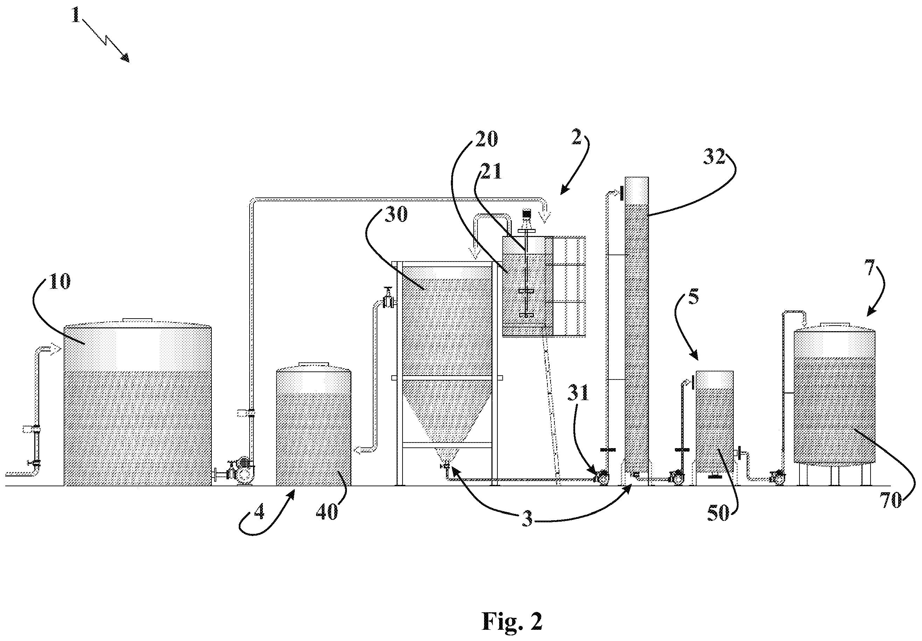

Advantageously, as depicted in figure 2, the separation unit 3 comprises a clarifier 30 and/or separation means 32, which are preferably selected from between: a separation column, a tangential filter, an ultrafiltration membrane, a centrifuge. These latter separation means 32 are well known to the person skilled in the art and therefore will not be described in detail below. Preferably, the separation unit 3 comprises both the clarifier 30 and the separation means 32.

In more detail, the clarifier 30 comprises a substantially cylindrical tank provided with a conical bottom, and a stilling pipe, arranged inside the first tank and concentric with the latter. Furthermore, the tank and the stilling pipe are connected below by means of an opening made below the stilling pipe itself.

Operatively, the matured waste waters Vm are preferably introduced tangentially inside the stilling pipe, and following a spiral path along the inner wall of the latter, first fill the same stilling pipe, and then exit from the opening of the latter and fill the tank. With this movement, the matured waste waters Vm are divided into clarified waters Vc, which can be extracted from the top of the tank, and sludge Vf, which settles on the bottom of the stilling pipe.

Advantageously, the sludge Vf is extracted from the bottom of the stilling pipe and sent by means of a centrifugal pump 31 to the separation means 32, for example a separation column, which allows the sludge Vf, comprising the flocculation F, to be further separated by gravity, concentrating most of the latter on the bottom of the column. Preferably, the volume of the sludge Vf is comprised between 2 and 5% of the total volume of matured waste waters Vm contained inside the separation column.

The plant 1 further comprises a first neutralization unit 4. and a second neutralization unit 5, in fluid communication with the separation unit 3. In particular, each of the neutralization units 4, 5 is arranged for respectively neutralizing the clarified waters Vc and the sludge Vf in order to obtain neutral clarified waters Vcn and neutral sludge Vfn.

Advantageously, the first neutralization unit 4 comprises a third tank 40, intended to receive the clarified waters Vc from the clarifier 30 and/or from the separation means 32, and the second neutralization unit 5 comprises a fourth tank 50, intended to collect the sludge Vf.

Preferably, the second neutralization unit 5 comprises a screw pump for extracting the sludge Vf from the clarifier 30 and/or from the separation means 32 and conveying them to the fourth tank 50.

Furthermore, each neutralization unit 4, 5 advantageously comprises metering means (not depicted in the attached figures) for introducing a measured quantity of a first acidic reagent Rac1 in the third tank 40, and a measured quantity of a second acidic reagent Rac2 in the fourth tank 50.

Advantageously, as explained in more detail below, the first and the second acidic reagent Rac1, Rac2 are intended to react with alkaline reagent residues Ra and with basic modified molecules M dissociated in water to lower the overall pH of the clarified waters Vc and the sludge Vf.

Advantageously, the plant 1 comprises a logical control unit configured to drive said metering means in order to introduce into at least one between said third tank 40 and said fourth tank 50 a metered quantity of said first acidic reagent Rac1 and/or of said second acidic reagent Rac2, respectively. In more detail, each neutralization unit 4, 5 comprises a pH sensor in data communication with the logical control unit, arranged for measuring the pH of the clarified waters Vc and of the sludge Vf and for sending a signal to the logical control unit which is representative of the pH detected. Furthermore, the logical control unit advantageously comprises a memory unit, which contains at least one pH threshold value. Advantageously, the logical control unit is configured to compare the signal coming from each pH sensor and to drive the metering means to introduce into the third tank 40 and/or the fourth tank 50 a metered quantity of the first acidic reagent Rac1 and/or of the second acidic reagent Rac2, respectively, on the basis of the comparison of the aforesaid signal with the threshold value.

Furthermore, the plant 1 comprises at least one anaerobic digester 7 placed downstream of the second neutralization unit 5 and arranged for treating the neutral sludge Vfn coming from the second neutralization unit 5 in order to generate biogas Vg and a digestate D, advantageously liquid. In particular, the biogas Vg comprises a methane fraction V_{CH4} and at least one first carbon dioxide fraction V_{1,CO₂}.

Advantageously, as explained in more detail below, the anaerobic digester 7 contains different types of anaerobic bacteria therein, according to the type of reaction which the latter promote.

In more detail, the aforesaid anaerobic bacteria are selected, depending on the temperatures at which they operate, from between: mesophilic bacteria, which advantageously work at a temperature preferably comprised between 35°C and 45°C, and thermophilic bacteria, which advantageously work at a temperature preferably comprised between 65°C and 75°C.

Advantageously, the anaerobic digester 7 comprises a fifth tank 70 inside which the anaerobic bacteria and the neutral sludge Vf to be metabolized are intended to be arranged. Furthermore, the anaerobic digester 7 advantageously comprises an outer heating jacket, which is arranged peripherally around the outer walls of the fifth tank 70 in order to maintain the internal temperature of the latter comprised within the operating range of the bacteria described above.

Furthermore, the plant 1 comprises a first purification unit 6 arranged for separating the first carbon dioxide fraction V_{1, CO2} from the methane fraction V_{CH4}, and, preferably, removes any impurities from the biogas Vg, such as for example water vapor, hydrogen sulfide, ammonia, etc.

Advantageously, the first purification unit 6 comprises purification means, which are selected from between: a condensation column, an acid washing column, a molecular membrane, a oscillating pressure absorption column, a high pressure water washing column, a basic washing column and a combination of these.

For example, the purification means can comprise a condensation column for removing the water vapor contained in the biogas Vg, an acid washing column for removing at least the ammonia and a basic washing column for possibly removing the hydrogen sulfide and other acidic compounds contained in the biogas Vg. Furthermore, the purification means advantageously comprise a molecular membrane for sieving the remaining biogas Vg, retaining the first carbon dioxide fraction V_{1,CO2} in a first chamber and making the methane fraction V_{CH4} permeate through the aforesaid molecular membrane, preferably conveying it towards a cogenerator 8 by means of a compressor unit.

Obviously, without thereby departing from the scope of protection of the present invention, the purification unit 6 can be provided with any other device capable of separating at least the first carbon dioxide fraction V_{1,CO2} and the methane fraction V_{CH4} from each other.

In accordance with the idea underlying the present invention, the first purification unit 6 is in fluid connection with at least one between the first and the second neutralization unit 4, 5 in order to introduce the first carbon dioxide fraction V_{1,CO2}. Advantageously, the purification unit 6 comprises first fan means, which are advantageously connected to the metering means of the neutralization units 4, 5, and are also operated by the logical control unit in order to convey the first carbon dioxide fraction V_{1,CO2} from the first chamber to the third and the fourth tank 40, 50, respectively.

In accordance with an alternative embodiment, the purification unit 6 can coincide with at least one between the first and the second neutralization unit 4, 5, so as to advantageously carry out the purification of the methane fraction V_{CH4} simultaneously with the neutralization of the clarified waters Vc and/or the sludge Vf.

Preferably, in accordance with the preferred embodiment of the present invention, the first carbon dioxide fraction V_{1,CO2} constitutes the first acidic reagent Rac1 and the second acidic reagent Rac2.

Advantageously, the plant 1 comprises a cogenerator 8 arranged for generating at least electrical energy and a combustion gas GC comprising at least a second carbon dioxide fraction V_{2,CO2} and a water vapor fraction V_{H2O,v} starting from the methane fraction V_{CH4} coming from the first purification unit 6.

Advantageously, the electrical energy developed by the cogenerator 8 is used to power one or more of the utilities of the units of the plant 1, such as for example pumps, compressors, sensors, stirring means, logical control unit and other components operating by means of electrical energy or other utilities near the plant 1 itself.

Thereby, a plant 1 is obtained which is capable of meeting the energy needs thereof.

Preferably, the cogenerator 8 is in fluid connection with at least one of the neutralization units 4, 5 in order to introduce at least the second carbon dioxide fraction V_{2,CO2} contained in the combustion gas GC, and preferably the entire combustion gas GC .

Furthermore, the cogenerator 8 is preferably in fluid connection with both the first and with the second neutralization unit 4, 5 in order to introduce the second carbon dioxide fraction V_{2,CO2} into both together with the first carbon dioxide fraction V_{1,CO2}. At the same time, by introducing the combustion gas GC into at least one of the neutralization units 4, 5, the latter is cleaned not only of carbon dioxide but also of other impurities, which remain in the clarified neutral waters Vcn and are easily separable in subsequent units of the plant 1.

According to an alternative embodiment of the present invention, the plant 1 comprises a second purification unit 9 arranged for receiving said combustion gas GC and separating the second carbon dioxide fraction V_{2,CO₂} from the water vapor fraction V_{H₂O,v}.

Advantageously, the second purification unit 9 comprises a condensation column, which is advantageously intended to condense the water vapor fraction V_{H2O,v} in order to separate the latter from the second carbon dioxide fraction V_{2,CO₂}, and advantageously to simultaneously produce hot water following the condensation of the water vapor. Preferably, such hot water is intended to be introduced inside the outer heating jacket of the fifth tank 70 of the anaerobic digester 7 and to heat the latter to the operating temperature at which the anaerobic bacteria operate.

Advantageously, the second purification unit 9 is in fluid connection with at least one between the first and the second neutralization unit 4, 5 in order to introduce the second carbon dioxide fraction V_{2,CO₂}. Preferably, the second purification unit 9 comprises second fan means, which are advantageously connected to the metering means of the neutralization units 4, 5, and are also driven by the logical control unit to convey the second carbon dioxide fraction V_{2,CO2} from the condensation column to the third and/or fourth tank 40, 50, respectively. Advantageously, the second purification unit 9 is in fluid connection with both the first and with the second neutralization unit 4, 5 in order to introduce the second carbon dioxide fraction V_{2,CO2} into both together with the first carbon dioxide fraction V_{1,CO2}.

Furthermore, the plant 1 advantageously comprises a stripping unit 11, preferably placed upstream of the first neutralization unit 5 and arranged for treating the clarified waters Vc. In particular, the stripping unit 11 is provided with insufflation means, for insufflating a gaseous current G into the clarified waters Vc and for extracting at least one ammonia fraction (preferably the totality of the dissolved ammonia) from the clarified waters Vc, obtaining a gaseous mixture MG comprising at least the ammonia fraction.

Preferably, the gaseous current G is air, however, without thereby departing from the scope of protection, the gaseous current G can consist of any gas capable of stripping the ammonia from the clarified waters Vc.

Obviously, without thereby departing from the scope of protection of the present invention, the stripping unit 11 can be placed downstream of the first neutralization unit 5 in order to treat the neutral clarified waters Vcn in an analogous manner.

Advantageously, the plant 1 further comprises a washing unit 12 of the gaseous mixture MG, which is in fluid communication with the stripping unit 11 and is arranged for removing the ammonia fraction from the gaseous mixture MG by means of reaction with an acidic aqueous solution, for example a diluted sulfuric acid aqueous solution, in order to obtain ammonium sulfate.

It is thereby possible to reduce the treatment times of waste waters Vr, avoiding the transformation of ammonia into nitrites and/or nitrates and then molecular nitrogen in order to be able to release the latter into the atmosphere without consequent environmental damage. Furthermore, the recovered ammonium sulfate can be used as a fertilizer.

Advantageously, the plant 1 comprises an aerobic reactor 15 arranged downstream of the first neutralization unit 4. In particular, the aerobic reactor 15 is arranged for reducing the concentration of residues of organic pollutant compound C in the neutral clarified waters Vcn, by means of aerobic bacteria.

Furthermore, the plant 1 advantageously comprises a chemical-physical treatment section, preferably placed downstream of the aerobic reactor 15, preferably in order to remove aerobic bacteria from the clarified neutral waters Vcn and any inorganic pollutant compounds which must necessarily be eliminated to allow the reuse of the clarified neutral waters Vcn or their discharge into nature.

In particular, the chemical-physical treatment section is provided with at least one between: an ultraviolet lamp, an ozone generator, a tangential filter, an ultrafiltration membrane.

Another object of the invention is a method for treating waste water, which preferably employs the plant 1 object of the present invention, of which all reference numbers will be retained for simplicity of explanation. Obviously, without thereby departing from the scope of protection of the present invention, such a method can employ any other plant for treating waste waters which lends itself to the purpose.

According to the idea underlying the present invention, the method comprises a step of supplying waste waters Vr to be treated, in which the waste waters Vr comprise at least one organic pollutant compound C.

In particular, the organic pollutant compound C is any unwanted organic molecule in the waste waters Vr which must be treated in order to discharge it into nature or reuse it within an industrial plant from which the waste waters Vr themselves derive.

For example, the organic pollutant compound C is a protein, a starch, cellulose deriving from the manufacturing process of meat, fish or the dairy or paper industry, or an organic dye deriving from the tanning industry.

Obviously without thereby departing from the scope of protection of the present invention, the organic pollutant compound C can be free in the waste waters or also contained in any unicellular element (bacteria and/or viruses) whose concentration in the waste waters Vr to be treated is higher than the legal limits and is likely to be eliminated by means of a method for their treatment.

Furthermore, the method comprises a step of adding an alkaline reagent Ra in the waste waters Vr in order to obtain alkalinized waste waters Va, in which the at least one organic pollutant compound C is transformed into modified molecules M due to the action of the alkaline reagent Ra. In particular, the modified molecules M are hydrolyzed and/or denatured molecules.

Advantageously, the alkaline reagent Ra is a strong base selected from among: sodium hydroxide, potassium hydroxide, calcium hydroxide, barium hydroxide, lithium hydroxide, magnesium hydroxide, and mixtures or compounds thereof.

Preferably, the alkaline reagent Ra is selected from among sodium hydroxide, potassium hydroxide, and mixtures or compounds thereof.

In fact, it has been surprisingly found that sodium hydroxide and/or potassium hydroxide, although characterized by a lower reaction yield with respect to other hydroxides in the above list, allow to obtain purer sludge Vf, which is advantageously lacking metals which would disturb the activity of the bacteria used in anaerobic digestion.

Furthermore, the sodium hydroxide and/or potassium hydroxide advantageously form compounds which are easier to digest and do not favor the entrainment of colloidal compounds together with the modified molecules M, as instead occurs when using the remaining hydroxides of the above list.

In particular, the above colloidal composites would be difficult to digest in anaerobic digestion and should therefore be separated or treated with strong acids.

Advantageously, the pH of the alkalinized waste waters Va is comprised between 10 and 14 and is preferably about 12.2.

In more detail, in the step of adding the alkaline reagent Ra, depending on the nature of the organic pollutant compound C, the molecules constituting the latter undergo structural modifications and/or are divided into molecules of lower molecular weight.

For example, the organic pollutant compound C can react with the alkaline reagent Ra according to an alkaline hydrolysis reaction, so that in the basic environment formed following the addition of the alkaline reagent Ra, the organic compound C splits into several different shorter-chain molecules.

Alternatively or in combination, the organic pollutant compound C can react with the alkaline reagent Ra without modifying the length of the chain thereof, but breaking the hydrogen bonds and the salt bridges.

In accordance with a first embodiment, the organic pollutant compound C comprises proteins provided with an excess of basic amino acids (arginine, lysine, histidine) and such proteins reach their isoelectric point, following the addition of the alkaline reagent Ra, i.e., a condition such that the polarization of the molecule is zero. Such a condition advantageously allows the aforesaid proteins to thicken with each other and generate a flocculation F in a subsequent maturation step which will be described in more detail below.

In accordance with a second embodiment, the organic pollutant compound C comprises proteins provided with an excess of acidic amino acids and the basic environment created following the addition of the alkaline reagent Ra denatures such proteins, modifying their secondary, ternary or quaternary structure, giving rise to the modified molecules M, without necessarily breaking their intramolecular bonds.

In accordance with a third embodiment, the organic pollutant compound C comprises cellulose and/or starches and the addition of the alkaline reagent Ra causes the denaturation of the aforesaid molecules and the breaking of the intramolecular bonds thereof, generating short-chain modified molecules M, in particular simple sugars.

In accordance with a fourth embodiment, the organic pollutant compound C is cellular material (ribosomes, cell nucleus composed of DNA) contained in a single-celled organism, for example a bacterium, present in the waste waters Vr and the alkaline reagent Ra causes the rupture of the cytoplasmic membrane, making the organic pollutant compound C itself available in the alkalinized waters Va. Such an organic pollutant compound C therefore comprises molecules endowed with weak intramolecular bonds and liable to be lysed in a basic environment, giving rise to the modified molecules M.

Optionally, the waste waters Vr also comprise heavy metals, such as for example chromium, and in the step of adding the alkaline reagent Ra, the latter also reacts therewith, causing them to precipitate as hydroxides. Such hydroxides are advantageously stored inside the flocculation F in a subsequent maturation step described below, and can therefore be easily separated from the alkalinized waters Va.

Furthermore, optionally, the waste waters Vr comprise phosphorus compounds, generally dissociated in water and therefore comprising for example the phosphate ion PO₃⁴⁻. Such an ion advantageously reacts with the alkaline reagent Ra, and forms an easily separable phosphorus salt.

Furthermore, the method comprises a maturation step of the alkalinized waste waters Va for a maturation time tm in which the modified molecules M coagulate in order to obtain matured waste waters Vm containing at least one flocculation F of the modified molecules M.

Preferably, the maturation time tm is comprised between 3 minutes and 30 minutes. During such a maturation time tm it is preferable to stir the alkalinized waters Va in order to maximize the collision probabilities between the modified molecules M dispersed in the aforesaid alkalinized waters Va. In particular, the modified molecules M form intermolecular bonds with each other, for example by means of polycondensation reactions, generating a flocculation F which is insoluble in the alkalinized waters Va.

Advantageously, the maturation step envisages the addition of at least one polyelectrolyte P to the alkalinized waste waters Va in order to accelerate the formation of the flocculation F.

In particular, the polyelectrolyte P is an organic polymer preferably selected from among: polyacrylic acid, sulfonated polystyrene, poly-dimethyl-ammonium chloride, and is preferably added at the beginning of the maturation time tm.

Furthermore, the method comprises a separation step, by means of a separation unit 3, of the matured waste waters Vm at least in clarified waters Vc and sludge Vf. In particular, the sludge Vf mainly contains the flocculation F.

Furthermore, the method comprises a first neutralization step of the clarified waters Vc in which the pH of the clarified waters Vc is decreased by at least one first acidic reagent Rac1 in order to obtain neutral clarified waters Vcn, and a second neutralization step of the sludge Vf in which the pH of the sludge Vf is decreased by means of at least one second acidic reagent Rac2 in order to obtain neutral sludge Vfn. Preferably, the neutral clarified waters Vcn and the neutral sludge Vfn have a pH of about 7. Preferably, the first acidic reagent Rac1 and/or the second acidic reagent Rac2 comprise, and preferably consist of, carbon dioxide for forming carbonates by means of reaction with alkaline reagent residues Ra and basic modified molecules M.

Furthermore, the method comprises a digestion step of the neutral sludge Vfn by means of an anaerobic digester 7 in order to produce at least one biogas Vg and one digestate D, advantageously liquid. In particular, the biogas Vg comprises at least one methane fraction V_{CH4} and a first carbon dioxide fraction V_{1,CO2}.

In more detail, the digestion step envisages the use of anaerobic bacteria, advantageously arranged inside the anaerobic digester 7 and kept in an environment with controlled temperature and pH.

In particular, the neutral sludge Vfn is introduced at a pH of about 7 inside the anaerobic digester 7, as the anaerobic bacteria present inside the anaerobic digester 7 need neutral pH conditions in order to be able to metabolize the neutral sludge Vfn and would not survive in a highly alkaline environment.

Advantageously, the digestion step comprises a first step in which the anaerobic bacteria hydrolyze the neutral sludge Vfn, acidifying the flocculation F contained in the latter and forming first by-products such as volatile fatty acids, ketones and alcohols. Furthermore, the digestion step comprises a second step, in which the aforesaid volatile fatty acids of the first by-products are transformed by the anaerobic bacteria into second by-products such as in particular acetic acid, formic acid, carbon dioxide and molecular hydrogen. Furthermore, advantageously, the digestion step comprises a third step, during which the anaerobic bacteria, starting from the second by-products, produce methane, for example starting from acetic acid or reducing the carbon dioxide produced using molecular hydrogen.

In order to carry out all the aforesaid stages of the digestion step, it is advantageous to use different types of anaerobic bacteria, in particular acidogenic bacteria, acetogenic bacteria and methanogenic bacteria, which advantageously intervene in the first, second and third stage of the digestion step.

Advantageously, the kinetics of the metabolization reactions of the flocculation F by the anaerobic bacteria is faster with respect to the kinetics of anaerobic digestion in traditional methods, since the flocculation F comprises modified molecules M, in particular hydrolyzed and/or denatured, and not the organic pollutant compound C, which would require a longer digestion time in order to be metabolized.

Thereby, a method for treating waste waters Vr is obtained which is capable of reducing the treatment time of at least one organic pollutant compound C initially present in such waste waters Vr.

Preferably, the mass of neutral sludge Vfn converted to biogas Vg is comprised between 40 and 60%, and the remaining percentage is transformed into digestate D.

The methane fraction V_{CH4} is preferably comprised between 50% and 70% of the biogas Vg produced, and the first carbon dioxide fraction V_{1,CO2} is preferably comprised between 25% and 45%.

Generally, the biogas Vf comprises impurities such as, for example, hydrogen sulfide, which if accumulated inside the anaerobic digester 7 would compromise the activity of the anaerobic bacteria or, if extracted together with the methane fraction and the first carbon dioxide fraction V_{1,CO2}, would be released into the atmosphere, contributing to environmental pollution.

To obviate this drawback, the digestion step comprises a fourth disposal stage, in which oxidative bacteria, in particular of the *Thiobacillus* or *Sulfolobus* genus, oxidize the hydrogen sulfide to elemental sulfur.

Alternatively, the elimination of the hydrogen sulfide can be carried out in steps following the anaerobic digestion step and preceding the combustion of the methane fraction V_{CH4}.

Furthermore, the method comprises a purification step, by means of a first purification unit 6, of at least a first carbon dioxide fraction V_{1,CO₂} separating it from the biogas Vg.

In accordance with the idea underlying the present invention, the first carbon dioxide fraction V_{1,CO₂} is added to at least one between the clarified waters Vc and the sludge Vf as first and/or second acidic reagent Rac1, Rac2 of the first neutralization step and/or the second neutralization step in order to decrease the pH thereof.

In particular, the first carbon dioxide fraction V_{1,CO₂} almost totally constitutes the first acidic reagent Rac1 and the second acidic reagent Rac2, and, as anticipated above, both in the sludge Vf and in the clarified waters Vc at least partially neutralizes any residual alkaline reagent Ra, forming at least one carbonate and/or bicarbonate salt, and the basic modified molecules M dissociated in water.

Advantageously, the method also comprises a combustion step of the methane fraction V_{CH₄} of the biogas Vg in order to produce at least electrical energy and a combustion gas GC comprising at least a second carbon dioxide fraction V_{2,CO2} and, preferably, a water vapor fraction V_{H2O,ᵥ}. In particular, at least the second carbon dioxide fraction V_{2,CO2} is added to at least one between the clarified waters Vc and the sludge Vf as first and/or second acidic reagent Rac1, Rac2 of the first neutralization step and/or the second neutralization step to decrease the pH thereof.

It is thereby possible to avoid the emission of carbon dioxide into the atmosphere, helping to reduce the environmental impact of the present treatment method with respect to the methods for treating waste waters of the known type.

In particular, the second carbon dioxide fraction V_{2,CO₂} is added to the first carbon dioxide fraction V_{1,CO2} in the first acidic reagent Rac1 and in the second acidic reagent Rac2.

Obviously, without thereby departing from the scope of protection of the present invention, the second carbon dioxide fraction V_{2,CO₂} separated from the combustion gas GC can be used for other purposes (for example in the carbonated drink production industry, after appropriate treatment) if the first carbon dioxide fraction V_{1,CO2} is already sufficient to neutralize the clarified waters Vc and sludge Vf.

Advantageously, the previously described purification step comprises a preliminary cleaning stage of the biogas Vg in order to remove pollutants (for example ammonia) from the latter. In particular, the aforesaid cleaning stage is advantageously performed before the combustion step of the methane fraction V_{CH₄} of the biogas Vg.

This avoids introducing the pollutants of the biogas Vg into the clarified waters Vc and the sludge Vf to be neutralized, or burning such pollutants together with the methane fraction V_{CH4}, releasing the latter into the atmosphere in the form, for example, of nitrogen oxides or chlorinated compounds (for example, dioxins).

During such a cleaning stage it is also possible to remove any hydrogen sulfide if the bacteria responsible for eliminating the aforesaid pollutant are absent in the anaerobic digester 7.

Alternatively, the purification step, and in particular the cleaning stage of the biogas Vg, can be performed simultaneously with the first and/or second neutralization step.

In the latter case, the biogas Vg is directly introduced for example into the clarified waters Vc (or into the sludge Vf) and in particular the first carbon dioxide fraction V_{1,CO2} is removed by means of the reaction with the alkaline reagent Ra contained in the clarified waters Vc, allowing the methane fraction V_{CH4} to pass, which is thus advantageously collected.

Furthermore, following the combustion step of the methane fraction V_{CH₄} of the biogas Vg, the method advantageously envisages a possible further purification step, by means of a second purification unit 9, of the second carbon dioxide fraction V_{2,CO₂} in order to separate it from the combustion gases GC.

In accordance with the preferred embodiment of the present invention, the waste waters Vr, and consequently the clarified waters Vc, comprise ammonia.

Advantageously, preferably before the first neutralization step, the method also comprises a step of insufflation of a gaseous current G into the clarified waters Vc in order to extract at least one ammonia fraction and preferably all of the ammonia, from the clarified waters Vc, obtaining a gaseous mixture MG comprising at least the ammonia fraction, and a reaction step of the ammonia fraction in the gaseous mixture MG with an acidic aqueous solution, preferably a sulfuric acid solution, in order to obtain at least one ammonium salt.

It is thereby possible to avoid the oxidation of the ammonia dissolved in water first to nitrites and nitrates and subsequently to nitrogen, for example by means of an aerobic digestion process, and at the same time produce one or more ammonium salts, for example ammonium sulfate, which can be used in the fertilizer industry.

Obviously, without thereby departing from the scope of protection of the present invention, the insufflation step can be performed after the first neutralization step in order to treat the clarified neutral waters Vcn in an analogous manner.

According to a preferred embodiment of the present invention, the method comprises a purification step of the neutral clarified waters Vcn by means of an aerobic treatment.

During such a step, the clarified neutral waters Vcn are treated with aerobic bacteria, preferably in an aerobic reactor 15, which aerobic bacteria metabolize any residues of the organic pollutant compound C, of modified molecules M, of flocculation F and/or of any other unwanted residual compounds to be eliminated. In particular, the aerobic bacteria produce biomass, which settles on the bottom of the aerobic reactor 15.

Advantageously moreover, the method comprises a purification step of the clarified neutral waters Vcn by means of a chemical-physical treatment chosen between filtration, disinfection, sedimentation.

In particular, the chemical-physical treatment is intended to eliminate the aerobic bacteria remaining in the neutral clarified waters Vcn following the aerobic treatment, for example by means of disinfection. Such disinfection can advantageously be carried out by adding ozone by bubbling into the clarified neutral waters Vcn, or by irradiating such waters with ultraviolet light. Advantageously, the addition of ozone and/or the treatment with ultraviolet light has a whitening effect, i.e., any molecules of dyes dissolved in water are degraded by the action of the chemical-physical agents described above.

According to an alternative embodiment of the present invention, the chemical-physical treatment is a filtration. Such filtration is preferably carried out by means of ion exchange resins, well known to those skilled in the art and therefore not described below, and are particularly adapted to remove the carbonates and bicarbonates formed in the neutral clarified waters Vcn following the first neutralization step.

Obviously, without thereby departing from the scope of protection of the present invention, the purification step of the clarified neutral waters Vcn can also comprise only one between the aerobic and chemical-physical treatments.

The method and plant 1 of the present invention advantageously allow the concentration of the organic pollutant compound C to be reduced below the desired limits regardless of the initial concentration of the organic pollutant compound C.

In fact, depending on the type of waste waters to be treated, more or less sludge Vf will be obtained depending on the concentration of the organic pollutant compound C, and, consequently, a more or less high quantity of biogas Vg depending on the mass of sludge Vf produced.

Therefore, the invention thus conceived achieves the pre-set objects.

## Claims

1. Method for treating waste waters, **characterized in that** it comprises the following operating steps:
- supply of waste waters (Vr) to be treated, said waste waters (Vr) comprising at least one organic pollutant compound (C);
- addition of an alkaline reagent (Ra) in said waste waters (Vr) in order to obtain alkalinized waste waters (Va), said at least one organic pollutant compound (C) being transformed into modified molecules (M) due to the action of said alkaline reagent (Ra);
- maturation of said alkalinized waste waters (Va) for a maturation time (tm) in which said modified molecules (M) coagulate in order to obtain matured waste waters (Vm) containing at least one flocculation (F) of said modified molecules (M);
- separation, by means of a separation unit (3), of said matured waste waters (Vm) at least into clarified waters (Vc) and sludge (Vf), and such sludge (Vf) mainly contains said flocculation (F);
- first neutralization of said clarified waters (Vc) in which the pH of said clarified waters (Vc) is decreased by means of at least one first acidic reagent (Rac1) in order to obtain neutral clarified waters (Vcn);
- second neutralization of said sludge (Vf) in which the pH of said sludge (Vf) is decreased by means of at least one second acidic reagent (Rac2) in order to obtain neutral sludge (Vfn);
- digestion of said neutral sludge (Vfn) by means of an anaerobic digester (7) in order to produce at least one biogas (Vg) and a digestate (D), said biogas (Vg) comprising at least one methane fraction (V_{CH4}) and a first carbon dioxide fraction (V_{1,CO₂});
- purification, by means of a first purification unit (6), of at least one first carbon dioxide fraction (V_{1,CO₂}), separating it from said biogas (Vg);
- combustion of the methane fraction (V_{CH₄}) of said biogas (Vg) in order to produce at least electrical energy and a combustion gas (GC), said combustion gas (GC) comprising at least a second carbon dioxide fraction (V_{2,CO₂}),
in which said first carbon dioxide fraction (V_{1,CO₂}) and said second carbon dioxide fraction (V_{2,CO₂}) are added to at least one between said clarified waters (Vc) and said sludge (Vf) as first and/or second acidic reagent (Rac1, Rac2) of said first neutralization step and/or said second neutralization step in order to decrease the pH thereof.

2. Method for treating waste waters according to claim 1, **characterized in that** said alkaline reagent (Ra) is a strong base selected from among: sodium hydroxide, potassium hydroxide, calcium hydroxide, barium hydroxide, lithium hydroxide, magnesium hydroxide and mixtures or compounds thereof,
and **in that** the pH of said alkalinized waste waters (Va) is comprised between 10 and 14.

3. Method for treating waste waters according to claim 1 or 2, **characterized in that** said maturation step provides for the addition of at least one polyelectrolyte (P) to said alkalinized waste waters (Va) in order to accelerate the formation of said flocculation (F).

4. Method for treating waste waters according to any one of the preceding claims, **characterized in that** said waste waters (Vr), and consequently said clarified waters (Vc) comprise ammonia; said method also comprising the following operative steps:
- insufflation of a gaseous current (G) in said clarified waters (Vc) in order to extract at least one fraction of said ammonia from said clarified waters (Vc), obtaining a gaseous mixture (MG) comprising at least said ammonia fraction;
- reaction of said ammonia fraction in said gaseous mixture (MG) with an acidic aqueous solution in order to obtain at least one ammonium salt.

5. Method for treating waste waters according to claim 4, **characterized in that** said step of insufflation of a gaseous current (G) in said clarified waters (Vc) and said reaction step of said ammonia fraction in said gaseous mixture (MG) are performed prior to the first neutralization step.

6. Method for treating waste waters according to any one of the preceding claims, **characterized in that** it comprises a step of cleaning said neutral clarified waters (Vcn) by means of a chemical-physical treatment selected from between filtration, disinfection, sedimentation.

7. Method for treating waste waters according to any one of the preceding claims, **characterized in that** it comprises a step of cleaning said neutral clarified waters (Vcn) by means of an aerobic treatment.

8. Plant for treating waste waters **characterized in that** it comprises:
- a first tank (10) arranged for containing waste waters (Vr) to be treated, said waste waters comprising at least one organic pollutant compound (C);
- metering means for metering an alkaline reagent (Ra) in said first tank (10) and obtaining alkalinized waste waters (Va);
- a maturation unit (2), comprising at least one second tank (20) in fluid communication with said first tank (10), and in which alkalinized waste waters (Va) are susceptible of being introduced which are coming from said first tank (10);
- a separation unit (3) in fluid communication with said maturation unit (2), said separation unit (3) being arranged for separating matured waste waters (Vm) coming from said maturation unit (2) into at least clarified waters (Vc) and sludge (Vf);
- a first neutralization unit (4) and a second neutralization unit (5), in fluid communication with said separation unit (3), each of said neutralization units (4, 5) being arranged for respectively neutralizing said clarified waters (Vc) and said sludge (Vf) in order to obtain neutral clarified waters (Vcn) and neutral sludge (Vfn);
- at least one anaerobic digester (7) placed downstream of said second neutralization unit (5) and arranged for treating said neutral sludge (Vfn) coming from said second neutralization unit (5) in order to generate biogas (Vg) and a digestate (D); said biogas (Vg) comprising a methane fraction (V_{CH₄}) and at least one first carbon dioxide fraction (V₁, _{CO₂});
- a first purification unit (6) arranged for separating said first carbon dioxide fraction (V_{1,CO₂}) from said methane fraction (V_{CH₄});
said first purification unit (6) being in fluid connection with at least one between said first and second neutralization units (4, 5) in order to introduce said first carbon dioxide fraction (V_{1, CO2}).
- a cogenerator (8) arranged for generating at least electrical energy, a combustion gas (GC), comprising at least one second carbon dioxide fraction (V₂, _{CO2}), and a water vapor fraction (V_{H2O,v}) starting from said methane fraction (V_{CH₄}) coming from said first purification unit (6);
said cogenerator (8) being in fluid connection with at least one between said first and second neutralization units (4, 5) in order to introduce at least said second carbon dioxide fraction (V₂, _{CO2}) therein which is contained in said combustion gas (GC).

9. Plant for treating waste waters according to claim 8, **characterized in that** said cogenerator (8) is in fluid connection with at least one between said first and second neutralization units (4, 5) in order to introduce the entire combustion gas (GC) therein.

10. Plant for treating waste waters according to claim 8 or 9, **characterized in that** it comprises:
- a stripping unit (11), placed upstream of said first neutralization unit (5) and arranged for treating said clarified waters (Vc); said stripping unit (11) being provided with insufflation means, in order to insufflate a gaseous current (G) into said clarified waters (Vc) and in order to extract at least one ammonia fraction from said clarified waters (Vc), obtaining a gaseous mixture (MG) comprising at least said ammonia fraction;
- a washing unit (12) of said gaseous mixture (MG), which is in fluid communication with said stripping unit (11) and is arranged for removing said ammonia fraction from said gaseous mixture (MG) by means of reaction with an acidic aqueous solution.

## Patentansprüche

1. Verfahren zur Behandlung von Abwässern, **dadurch gekennzeichnet, dass** es die folgenden Betriebsphasen umfasst:
- Bereitstellung von zu behandelnden Abwässern (Vr), wobei die genannten Abwässer (Vr) mindestens eine organische Schadstoffverbindung (C) enthalten;
- Zugabe eines alkalischen Reagenzes (Ra) zu den genannten Abwässern (Vr), um alkalisierte Abwässer (Va) zu erhalten, wobei die genannte mindestens eine organische Schadstoffverbindung (C) durch Wirkung des genannten alkalischen Reagenzes (Ra) in modifizierte Moleküle (M) umgewandelt wird;
- Reifung der genannten alkalisierten Abwässer (Va) für eine Reifungszeit (tm), in der die genannten modifizierten Moleküle (M) koagulieren, um gereifte Abwässer (Vm) zu erhalten, die mindestens ein Flokkulat (F) der genannten modifizierten Moleküle (M) enthalten;
- Trennung der genannten gereiften Abwässer (Vm) mittels einer Trenneinheit (3) mindestens in geklärtes Wasser (Vc) und Schlamm (Vf), wobei der Schlamm (Vf) hauptsächlich das genannte Flokkulat (F) enthält;
- erste Neutralisierung des genannten geklärten Wassers (Vc), bei der der pH-Wert des genannten geklärten Wassers (Vc) mittels mindestens eines ersten sauren Reagenzes (Rac1) gesenkt wird, um neutrales geklärtes Wasser (Vcn) zu erhalten;
- zweite Neutralisierung des genannten Schlamms (Vf), bei der der pH-Wert des genannten Schlamms (Vf) mittels mindestens eines zweiten sauren Reagenzes (Rac2) gesenkt wird, um neutralen Schlamm (Vfn) zu erhalten;
- Faulung des genannten neutralen Schlamms (Vfn) mittels eines anaeroben Faulbehälters (7), um mindestens ein Biogas (Vg) und einen Gärrest (D) zu erzeugen, wobei das genannte Biogas (Vg) mindestens eine Methanfraktion (V_{CH4}) und eine erste Kohlendioxidfraktion (V_{1,CO₂}) umfasst;
- Reinigung mindestens einer ersten Kohlendioxidfraktion (V_{1,CO₂}) durch Trennung derselben von dem genannten Biogas (Vg) mittels einer ersten Reinigungseinheit (6);
- Verbrennung der Methanfraktion (V_{CH4}) des genannten Biogases (Vg), um mindestens elektrische Energie und ein Verbrennungsgas (GC) zu erzeugen, wobei das genannte Verbrennungsgas (GC) mindestens eine zweite Kohlendioxidfraktion (V_{2,CO₂}) enthält,
wobei die genannte erste Kohlendioxidfraktion (V_{1,CO₂}) und die genannte zweite Kohlendioxidfraktion (V_{2,CO₂}) mindestens dem genannten geklärten Wasser (Vc) bzw. dem genannten Schlamm (Vf) als erstes und/oder zweites saures Reagenz (Rac1, Rac2) der genannten Phase der ersten Neutralisierung und/oder der genannten Phase der zweiten Neutralisierung zugesetzt werden, um dessen pH-Wert zu senken.

2. Verfahren zur Behandlung von Abwässern nach Anspruch 1, **dadurch gekennzeichnet, dass** das genannte alkalische Reagenz (Ra) eine starke Base ist, die unter Folgendem gewählt wird: Natriumhydroxid, Kaliumhydroxid, Calciumhydroxid, Bariumhydroxid, Lithiumhydroxid, Magnesiumhydroxid und deren Mischungen oder Verbindungen.
und dadurch, dass der pH-Wert der genannten alkalisierten Abwässer (Va) zwischen 10 und 14 liegt.

3. Verfahren zur Behandlung von Abwässern nach Anspruch 1 oder 2, **dadurch gekennzeichnet, dass** die genannte Reifungsphase die Zugabe von mindestens einem Polyelektrolyten (P) zu den genannten alkalisierten Abwässern (Va) vorsieht, um die Bildung des genannten Flokkulats (F) zu beschleunigen.

4. Verfahren zur Behandlung von Abwässern nach einem beliebigen der vorangegangenen Ansprüche, **dadurch gekennzeichnet, dass** die genannten Abwässer (Vr) und folglich das genannte geklärte Wasser (Vc) Ammoniak enthalten;
wobei das genannte Verfahren außerdem die folgenden Betriebsphasen umfasst:
- Einblasen eines Gasstroms (G) in das genannte geklärte Wasser (Vc), um mindestens eine Fraktion des genannten Ammoniaks aus dem genannten geklärten Wasser (Vc) zu entfernen und so ein Gasgemisch (MG) zu erhalten, das mindestens die genannte Ammoniakfraktion enthält;
- Reaktion der genannten Ammoniakfraktion in dem genannten Gasgemisch (MG) mit einer sauren wässrigen Lösung, um mindestens ein Ammoniumsalz zu erhalten.

5. Verfahren zur Behandlung von Abwässern nach Anspruch 4, **dadurch gekennzeichnet, dass** die genannte Phase des Einblasens eines Gasstroms (G) in das genannte geklärte Wasser (Vc) und die genannte Phase der Reaktion der genannten Ammoniakfraktion in dem genannten Gasgemisch (MG) vor der Phase der ersten Neutralisierung durchgeführt werden.

6. Verfahren zur Behandlung von Abwässern nach einem beliebigen der vorangegangenen Ansprüche, **dadurch gekennzeichnet, dass** es eine Phase der Reinigung des genannten neutralen geklärten Wassers (Vcn) mittels einer chemisch-physikalischen Behandlung umfasst, die unter Filtration, Desinfektion bzw. Sedimentation gewählt wird.

7. Verfahren zur Behandlung von Abwässern nach einem beliebigen der vorangegangenen Ansprüche, **dadurch gekennzeichnet, dass** es eine Phase der Reinigung des genannten neutralen geklärten Wassers (Vcn) mittels einer aeroben Behandlung umfasst.

8. Anlage zur Behandlung von Abwässern, **dadurch gekennzeichnet, dass** sie Folgendes umfasst:
- einen ersten Behälter (10), der darauf ausgelegt ist, zu behandelnde Abwässer (Vr) zu enthalten, wobei die genannten Abwässer mindestens eine organische Schadstoffverbindung (C) enthalten;
- Dosiervorrichtungen, um ein alkalisches Reagenz (Ra) in den genannten ersten Behälter (10) zu dosieren und alkalisierte Abwässer (Va) zu erhalten;
- eine Reifungseinheit (2), die mindestens einen zweiten Behälter (20) umfasst, der in Fluidverbindung mit dem genannten ersten Behälter (10) steht und in den aus dem genannten ersten Behälter (10) stammende alkalisierte Abwässer (Va) eingeleitet werden können;
- eine Trenneinheit (3), die in Fluidverbindung mit der genannten Reifungseinheit (2) steht, wobei die genannte Trenneinheit (3) darauf ausgelegt ist, aus der genannten Reifungseinheit (2) stammende gereifte Abwässer (Vm) in mindestens geklärtes Wasser (Vc) und Schlamm (Vf) zu trennen;
- eine erste Neutralisierungseinheit (4) und eine zweite Neutralisierungseinheit (5), die in Fluidverbindung mit der genannten Trenneinheit (3) stehen, wobei jede der genannten Neutralisierungseinheiten (4, 5) darauf ausgelegt ist, jeweils das geklärte Wasser (Vc) und den genannten Schlamm (Vf) zu neutralisieren, um neutrales geklärtes Wasser (Vcn) und neutralen Schlamm (Vfn) zu erhalten;
- mindestens einen anaeroben Faulbehälter (7), der nach der genannten zweiten Neutralisierungseinheit (5) angeordnet und darauf ausgelegt ist, den aus der genannten zweiten Neutralisierungseinheit (5) stammenden genannten neutralen Schlamm (Vfn) zu behandeln, um Biogas (Vg) und einen Gärrest (D) zu erzeugen; wobei das genannte Biogas (Vg) eine Methanfraktion (V_{CH4}) und mindestens eine erste Kohlendioxidfraktion (V_{1, CO₂}) enthält;
- eine erste Reinigungseinheit (6), die darauf ausgelegt ist, die genannte erste Kohlendioxidfraktion (V_{1, CO₂}) von der genannten Methanfraktion (V_{CH4}) zu trennen;
wobei die genannte erste Reinigungseinheit (6) in Fluidverbindung mit mindestens einer der genannten ersten und zweiten Neutralisierungseinheit (4, 5) steht, um die genannte erste Kohlendioxidfraktion (V_{1, CO₂}) in diese einzuleiten.
- einen Kogenerator (8), der darauf ausgelegt ist, mindestens elektrische Energie, ein Verbrennungsgas (GC), das mindestens eine zweite Kohlendioxidfraktion (V₂, _{CO₂}) enthält, und eine Wasserdampffraktion (V_{H₂O,v}) ausgehend von der aus der genannten ersten Reinigungseinheit (6) stammenden genannten Methanfraktion (V_{CH₄}) zu erzeugen;
wobei der genannte Kogenerator (8) in Fluidverbindung mit mindestens einer der genannten ersten und zweiten Neutralisierungseinheit (4, 5) steht, um mindestens die in dem genannten Verbrennungsgas (GC) enthaltene genannte zweite Kohlendioxidfraktion (V₂, _{CO₂}) in diese einzuleiten.

9. Anlage zur Behandlung von Abwässern nach Anspruch 8, **dadurch gekennzeichnet, dass** der genannte Kogenerator (8) in Fluidverbindung mit mindestens einer der genannten ersten und zweiten Neutralisierungseinheit (4, 5) steht, um das gesamte Verbrennungsgas (GC) in diese einzuleiten.

10. Anlage zur Behandlung von Abwässern nach Anspruch 8 oder 9, **dadurch gekennzeichnet, dass** sie Folgendes umfasst:
- eine Stripping-Einheit (11), die vor der genannten ersten Neutralisierungseinheit (5) positioniert und darauf ausgelegt ist, das genannte geklärte Wasser (Vc) zu behandeln; wobei die genannte Stripping-Einheit (11) mit Einblasmitteln ausgestattet ist, um einen Gasstrom (G) in das genannte geklärte Wasser (Vc) einzublasen und um mindestens eine Ammoniakfraktion aus dem genannten geklärten Wasser (Vc) zu entfernen und so ein Gasgemisch (MG) zu erhalten, das mindestens die genannte Ammoniakfraktion enthält; .
- eine Wascheinheit (12) für das genannte Gasgemisch (MG), die in Fluidverbindung mit der genannten Stripping-Einheit (11) steht und darauf ausgelegt ist, die genannte Ammoniakfraktion aus dem genannten Gasgemisch (MG) mittels Reaktion mit einer sauren wässrigen Lösung zu entfernen.

## Revendications

1. Procédé de traitement des eaux usées, **caractérisé en ce qu'**il comprend les étapes opérationnelles suivantes :
- collecte des eaux usées (Vr) à traiter, lesdites eaux usées (Vr) comprenant au moins un composé organique polluant (C) ;
- ajout d'un réactif alcalin (Ra) dans lesdites eaux usées (Vr) pour obtenir des eaux usées alcalinisées (Va), ledit au moins un composé organique polluant (C) étant transformé en molécules modifiées (M) sous l'action dudit réactif alcalin (Ra) ;
- maturation desdites eaux usées alcalinisées (Va) pendant un temps de maturation (tm) dans laquelle lesdites molécules modifiées (M) coagulent pour obtenir des eaux usées matures (Vm) contenant au moins une floculation (F) desdites molécules modifiées (M) ;
- séparation, au moyen d'une unité de séparation (3), desdites eaux usées matures (Vm) en au moins des eaux clarifiées (Vc) et des boues (Vf), boues (Vf) qui contiennent principalement ladite floculation (F) ;
- première neutralisation desdites eaux clarifiées (Vc) dans laquelle le pH desdites eaux clarifiées (Vc) est réduit par au moins un premier réactif acide (Rac1) pour obtenir des eaux clarifiées neutres (Vcn) ;
- seconde neutralisation desdites boues (Vf) dans laquelle le pH desdites boues (Vf) est réduit par au moins un second réactif acide (Rac2) pour obtenir des boues neutres (Vfn) ;
- digestion desdites boues neutres (Vfn) au moyen d'un digesteur anaérobie (7) pour produire au moins un biogaz (Vg) et un digestat (D), ledit biogaz (Vg) comprenant au moins une fraction de méthane (V_{CH4}) et une première fraction de dioxyde de carbone (V_{1,CO₂}) ;
- purification, au moyen d'une première unité de purification (6), d'au moins une première fraction de dioxyde de carbone (V_{1,CO₂}) en la séparant dudit biogaz (Vg) ;
- combustion de la fraction de méthane (V_{CH4}) dudit biogaz (Vg) pour produire au moins de l'énergie électrique et un gaz de combustion (GC), ledit gaz de combustion (GC) comprenant au moins une seconde fraction de dioxyde de carbone (V_{2,CO₂}),
dans lequel ladite première fraction de dioxyde de carbone (V_{1,CO₂}) et ladite seconde fraction de dioxyde de carbone (V_{2,CO₂}) sont ajoutées à au moins une desdites eaux clarifiées (Vc) et desdites boues (Vf) en tant que premier et/ou second réactif acide (Rac1, Rac2) de ladite étape de première neutralisation et/ou de ladite étape de seconde neutralisation pour en réduire le pH.

2. Procédé de traitement des eaux usées selon la revendication 1, **caractérisé en ce que** ledit réactif alcalin (Ra) est une base forte choisie parmi : l'hydroxyde de sodium, l'hydroxyde de potassium, l'hydroxyde de calcium, l'hydroxyde de baryum, l'hydroxyde de lithium, l'hydroxyde de magnésium et leurs mélanges ou composés.
et **en ce que** le pH desdites eaux usées alcalinisées (Va) est compris entre 10 et 14.

3. Procédé de traitement des eaux usées selon la revendication 1 ou 2, **caractérisé en ce que** ladite étape de maturation prévoit l'ajout d'au moins un polyélectrolyte (P) auxdites eaux usées alcalinisées (Va) pour accélérer la formation de ladite floculation (F).

4. Procédé de traitement des eaux usées selon l'une quelconque des revendications précédentes, **caractérisé en ce que** lesdites eaux usées (Vr), et par conséquent lesdites eaux clarifiées (Vc) comprennent de l'ammoniac ;
ledit procédé comprenant en outre les étapes opérationnelles suivantes :
- insufflation d'un flux gazeux (G) dans lesdites eaux clarifiées (Vc) afin d'extraire au moins une fraction dudit ammoniac desdites eaux clarifiées (Vc), en obtenant un mélange gazeux (MG) comprenant au moins ladite fraction d'ammoniac ;
- réaction de ladite fraction d'ammoniac dans ledit mélange gazeux (MG) avec une solution aqueuse acide pour obtenir au moins un sel d'ammonium.

5. Procédé de traitement des eaux usées selon la revendication 4, **caractérisé en ce que** ladite étape d'insufflation d'un flux gazeux (G) dans lesdites eaux clarifiées (Vc) et ladite étape de réaction de ladite fraction d'ammoniac dans ledit mélange gazeux (MG) sont effectuées avant l'étape de première neutralisation.

6. Procédé de traitement des eaux usées selon l'une quelconque des revendications précédentes, **caractérisé en ce qu'**il comprend une étape d'épuration desdites eaux clarifiées neutres (Vcn) par un traitement physico-chimique choisi parmi la filtration, la désinfection, la sédimentation.

7. Procédé de traitement des eaux usées selon l'une quelconque des revendications précédentes, **caractérisé en ce qu'**il comprend une étape d'épuration desdites eaux clarifiées neutres (Vcn) par un traitement aérobie.

8. Installation de traitement des eaux usées **caractérisée en ce qu'**elle comprend :
- un premier réservoir (10) prédisposé pour contenir les eaux usées (Vr) à traiter, lesdites eaux usées comprenant au moins un composé organique polluant (C) ;
- des moyens de dosage pour doser un réactif alcalin (Ra) dans le premier réservoir (10) et obtenir des eaux usées alcalinisées (Va) ;
- une unité de maturation (2), comprenant au moins un second réservoir (20) en communication fluidique avec ledit premier réservoir (10), et dans lequel les eaux usées alcalinisées (Va) dudit premier réservoir (10) sont susceptibles d'être déversées ;
- une unité de séparation (3) en communication fluidique avec ladite unité de maturation (2), ladite unité de séparation (3) étant prédisposée pour séparer les eaux usées maturées (Vm) de ladite unité de maturation (2) en au moins des eaux clarifiées (Vc) et des boues (Vf) ;
- une première unité de neutralisation (4) et une seconde unité de neutralisation (5), en communication fluidique avec ladite unité de séparation (3), chacune desdites unités de neutralisation (4, 5) étant prédisposée pour neutraliser respectivement lesdites eaux clarifiées (Vc) et lesdites boues (Vf) afin d'obtenir des eaux clarifiées neutres (Vcn) et des boues neutres (Vfn) ;
- au moins un digesteur anaérobie (7) placé en aval de ladite seconde unité de neutralisation (5) et prédisposé pour traiter lesdites boues neutres (Vfn) provenant de ladite seconde unité de neutralisation (5) afin de générer du biogaz (Vg) et un digestat (D) ; ledit biogaz (Vg) comprenant une fraction de méthane (V_{CH4}) et au moins une première fraction de dioxyde de carbone (V_{1, CO₂}) ;
- une première unité de purification (6) prédisposée pour séparer ladite première fraction de dioxyde de carbone (V_{1, CO₂}) de ladite fraction de méthane (V_{CH4}) ;
ladite première unité de purification (6) étant en liaison fluidique avec au moins l'une desdites première et seconde unités de neutralisation (4, 5) pour y déverser ladite première fraction de dioxyde de carbone (V₁, _{CO₂}).
- un cogénérateur (8) prédisposé pour générer au moins de l'énergie électrique, un gaz de combustion (GC), comprenant au moins une seconde fraction de dioxyde de carbone (V₂, _{CO₂}), et une fraction de vapeur d'eau (V_{H₂O,v}) à partir de ladite fraction de méthane (V_{CH4}) provenant de ladite première unité de purification (6) ;
ledit cogénérateur (8) étant en liaison fluidique avec au moins une desdites première et seconde unités de neutralisation (4, 5) pour y déverser au moins ladite seconde fraction de dioxyde de carbone (V₂, _{CO₂}) contenue dans ledit gaz de combustion (GC).

9. Installation de traitement des eaux usées selon la revendication 8, **caractérisée en ce que** ledit cogénérateur (8) est en liaison fluidique avec au moins l'une desdites première et seconde unités de neutralisation (4, 5) pour y déverser tout le gaz de combustion (GC).

10. Installation de traitement des eaux usées selon la revendication 8 ou 9, **caractérisée en ce qu'**elle comprend :
- une unité de stripping (11), placée en amont de ladite première unité de neutralisation (5) et prédisposée pour traiter lesdites eaux clarifiées (Vc); ladite unité de stripping (11) étant pourvue de moyens d'insufflation, pour insuffler un flux gazeux (G) dans lesdites eaux clarifiées (Vc) et pour extraire au moins une fraction d'ammoniac desdites eaux clarifiées (Vc) en obtenant un mélange gazeux (MG) comprenant au moins ladite fraction d'ammoniac ,
- une unité de lavage (12) dudit mélange gazeux (MG), qui est en communication fluidique avec ladite unité de stripage (11) et qui est prédisposée pour éliminer ladite fraction d'ammoniac dudit mélange gazeux (MG) par réaction avec une solution aqueuse acide.
